# EUROPÄISCHE PATENTSCHRIFT

(11) **EP 2 292 677 B1**
(45) Veröffentlichungstag und Bekanntmachung des Hinweises auf die Patenterteilung: **21.03.2012**
(21) Anmeldenummer: 10170087.0
(22) Anmeldetag: 20.07.2010
(51) Int. Cl.: C08G 18/50, C08J 9/00, C08K 5/521, C08K 5/524

(54) **Phosphorarme Laminieradditive mit geringer Emission, verbesserter Anfangshaftung und verbesserter Hydrolysestabilität**
Low phosphorous laminating additive with low emission, improved initial adhesion and improved hydrolysis stability
Additifs de laminage pauvres en phosphore dotés d'une émission réduite, d'une adhérence initiale améliorée et d'une stabilité en hydrolyse améliorée

(30) Priorität: 02.09.2009 DE 102009029089
(43) Veröffentlichungstag der Anmeldung: 09.03.2011
(73) Patentinhaber: Evonik Goldschmidt GmbH, 45127 Essen (DE)
(72) Erfinder: Schmitz, Sarah, 45130 Essen (DE); Eilbracht, Christian, 44627 Herne (DE)

(56) Entgegenhaltungen:
- EP-A1- 1 061 095
- EP-A2- 0 189 644
- US-A- 4 652 485
- US-A- 4 880 844

## Beschreibung

Die vorliegende Erfindung ist gerichtet auf phosphorarme Laminieradditive, insbesondere solche, die in Polyurethansystemen, insbesondere Polyurethanschäumen, zur Flammlaminierung von Substraten eingesetzt werden, sowie auf Laminate, die unter Verwendung der erfindungsgemäßen Laminieradditive erhalten werden. Diese Additive zeichnen sich durch minimale Emission und eine verbesserte Anfangshaftung im Vergleich zu konventionellen Additiven aus.

Bei der Herstellung vieler Artikel, bei der flexible Polyurethansysteme, insbesondere -schäume eingesetzt werden, besteht die Notwendigkeit, eine adhäsive Bindung zwischen dem Polyurethansystem und dem Substrat, wie z. B. Holz, Textilien, Metallen oder Kunststoffmaterial, zu erhalten. Eine Methode Schäume zu verbinden bzw. Schäume mit Textilien zu überziehen ohne zusätzlich Klebstoffe oder Adhäsive zu verwenden, ist die Methode der sogenannten Heißverklebung. Es ist dabei üblich, durch Einwirkung von Hitze die Oberfläche des Polyurethansystems (-schaums) in eine klebrige Masse zu verwandeln, auf welche dann das Substrat auflaminiert wird. Nach dem Abkühlen der klebrigen Masse wird diese fest und es wird eine sehr haltbare Verbindung von Polyurethansystem und Substrat erhalten.

Diese Methode war ursprünglich ausschließlich für Polyurethane vom Polyester-Typ geeignet, da solche des Polyether-Typs nach dem Erkalten nicht ausreichend verfestigten und eine sehr schlechte generelle Haftung und insbesondere Anfangshaftung mit z.B. Textilstoffen aufweisen.

US 3,205,120 beschreibt erstmals wärmebehandelte Polyurethanschaumlaminate, die auf den billigeren Polyetherurethanschäumen basieren. Neben einem konventionellen Polyether wird ein kleiner Anteil eines niedermolekularen Polyols, ausgewählt aus Polyoxyalkylenpolyolen, hydroxyaliphatischen Estern einer phosphorhaltigen Säure und Hydroxyl-Gruppen haltigen natürlichen Ölen, eingesetzt.

In US 3,497,416 werden geschlossene Polyurethanschaumlaminate beschrieben, die auf Polyether-Polyurethanschäumen basieren. Der Schaum enthält ein Reaktionsprodukt eines Polyetherpolyols und eines Polyisocyanats, welches erhalten wird durch Umsetzung von Dipropylenglycol oder Dibutylenglycol mit einem Überschuss eines aromatischen Polyisocyanats. In dieser Schrift werden zahlreiche Verfahrensschwierigkeiten identifiziert, die auf die hohe Reaktivität von Polyetherpolyolen zurückgeführt werden.

In US 3,131,105 wird eine Methode zur Herstellung von Laminatstrukturen beschrieben, bei dem auf die Oberfläche eines Polyurethanschaums eine Beschichtung mit einer entflammbaren Substanz aufgebracht wird, diese Beschichtung anschließend entzündet wird und unter Druck auf die plastifizierte Oberfläche eine Schicht eines Materials aufgebracht wird, welches mit der Oberfläche verbunden werden soll. Diese Methode ist für beide Arten von Polyurethanschäumen geeignet. Die Zugabe von Additiven zu den Schäumen wird nicht offenbart.

US 3,142,650 und 3,142,651 beschreiben die Herstellung von Polyurethan ausgehend von Hydroxylgruppen enthaltenden Phosphitestern, wie z. B. ein tris-Polypropylenglycolphosphit. Die Herstellung von Polyurethanschaum basierten Flammlaminaten wird nicht beschrieben.

In DE 4236767 wird zur Erhöhung der Flammkaschierbarkeit vorgeschlagen, dem PUR-Etherschaumstoff PUR-Esterschaumstoff in Pulverform zuzusetzen. Von Nachteil ist hier jedoch die zunehmende Hydrolyseinstabilität bei steigendem Gehalt an Polyesterpolyol.

In US 4,135,042 wird die Verwendung von Phosphiten als Flammschutzmitteln in Polyurethanschäumen, die halogenierte Phosphatpolyesteradditive enthalten, beschrieben. Auch dieses Schutzrecht beschreibt nicht die Herstellung von Polyurethanschaum basierten Flammlaminaten.

Der Einsatz von linearen Diolen soll die Thermoplastizität der Polyether-Polyurethane erhöhen und so zu einer reversiblen Schmelze des Schaumes führen US 5,900,087. Literaturbekannt ist jedoch, dass die Bindung zwischen Schaum und Substrat erst dann eintritt, wenn wesentlich höhere Temperaturen erreicht werden als solche, die lediglich zur Verformung durch Thermoplastizität erforderlich sind (K. F. Hager, M. B. Brodbeck; Journal of Cellular Plastics 1968).

Der Zusatz von natural oil based polyols (NOPs) wurde im Patent WO 2009017973A1 als unterstützend bezüglich der Flammlaminierung beschrieben. Auch NOPs enthalten einen gewissen Anteil an Polyesterpolyolen und tragen so zur Verringerung der Hydrolysestabilität von Schäumen bei. Da es sich bei NOPs um natürliche Produkte handelt, unterliegt die Verarbeitbarkeit gewissen Schwankungen. Oft treten Probleme durch Unverträglichkeit der verschiedenen Polyole auf, sodass andere Additive wie Emulgatoren zugesetzt werden müssen. Zudem geben NOPs den Schäumen oftmals einen charakteristischen, unerwünschten Geruch.

EP 0 189 644 beschreibt eine flammlaminierbare Polyurethanzusammensetzung die zumindest ein phosphororganisches Additiv aufweist, welches in der Lage ist, die Laminierbarkeit zu steigern. Als phosphororganische Verbindungen werden Organophosphite, Organophosphonate und Organophosphate genannt. Die Verwendung von phosphororganischen Verbindungen führt ebenfalls zu einer Hydrolyseempfindlichkeit.

Allen aufgeführten Verfahren des Standes der Technik ist gemein, dass Polyetherschäume mit mehr oder minder verbesserter Laminierbarkeit erhalten werden. Verglichen mit Polyesterschäumen kann durch die oben aufgeführten Additive jedoch keine entsprechende Haftung, insbesondere Anfangshaftung erhalten werden. Zudem wurde in den oben genannten Schriften die Verbesserung bezüglich Emission der zugegebenen Additive außer Acht gelassen. Durch Zusatz von Additiven auf der Basis von Phosphorverbindungen muss zudem eine Verringerung der Hydrolysestabilität in Kauf genommen werden.

Es bestand deshalb die Aufgabe alternative Heißverklebungsadditive bereitzustellen, die einen oder mehrere der Nachteile der oben genannten Additive vermeiden. Insbesondere sollte ein möglichst hydrolysestabiles, emissionsarmes, halogenfreies Additiv bereitgestellt werden, welches ein geringeres Rauchen beim Heißverkleben zeigt. Die entstehende Bindung zwischen Schaum und Substrat sollte dabei nach wenigen Minuten bereits ausgeprägt sein und nach einer bis mehreren Stunden mindestens genauso groß oder vorzugsweise größer sein als die Bindung im Schaum selbst. Bevorzugt sollte die Schaumoberfläche nicht verhärten, damit z. B. der Sitzkomfort bei beispielsweise Möbeln, wie Automobilsitzen, nicht negativ beeinflusst wird.

Überraschenderweise wurde gefunden, dass die Aufgabe der vorliegenden Erfindung durch die beanspruchte Zusammensetzung gelöst wird.

Gegenstand der vorliegenden Erfindung sind deshalb Zusammensetzungen, die zur Herstellung von zur Heißverklebung geeigneten Polyurethansystemen geeignet sind, welche dadurch gekennzeichnet sind, dass sie von 1 bis 15 Massen-%, vorzugsweise 2,5 bis 10 Massen-% und besonders bevorzugt 4,5 bis 8,5 Massen-% bezogen auf die Gesamtzusammensetzung eines Additivgemisches wie in Anspruch 1 definiert aufweisen, welches zumindest eine phosphororganische Verbindung allein oder in Kombination mit mindestens einer Verbindung (X), die mindestens zwei funktionelle Gruppen aufweist, die mit Isocyanat-Gruppen reagieren können (Isocyanat-reaktive Gruppen), aufweist.

Außerdem ist Gegenstand der Erfindung ein Polyurethansystem, insbesondere ein Polyurethanschaum, das durch Verschäumen einer erfindungsgemäßen Zusammensetzung erhältlich ist.

Ebenso ist Gegenstand der vorliegenden Erfindung eine laminierte Struktur, enthaltend ein erfindungsgemäßes Polyurethansystem heißverklebt mit einem Substrat sowie ein Verfahren zu dessen Herstellung.

Die erfindungsgemäßen Zusammensetzungen haben den Vorteil, dass durch deren Zusatz sowohl die Hydrolysestabilität als auch die Anfangshaftung der Schäume, verglichen mit der von Schäumen, die ohne entsprechende Additive (Vernetzer) hergestellt wurden, signifikant erhöht werden kann und zudem sehr stabile Bindungen, insbesondere Bindungen, die größer als die Bindungen im Schaum selbst sind, zwischen Polyurethansystem und Substrat nach kurzer Anpressphase von Schaum und Substrat erhalten werden. Durch den erfindungsgemäßen bevorzugt vorherrschenden Anteil der Verbindung (X), die mindestens zwei funktionelle Gruppen aufweist, die mit Isocyanat-Gruppen reagieren können, in Kombination mit der phosphororganischen Verbindung im Additivgemisch kann das Phänomen der Rauchentwicklung beim Erhitzen verringert werden.

Im Rahmen der vorliegenden Erfindung werden unter dem Begriff der Heißverklebung die Methoden der Flamm-, Heiß- oder Infrarotlaminierung oder -kaschierung, Ultraschall- oder andere Hochfrequenzverklebung und Verschweißung zusammengefasst.

Die erfindungsgemäßen Zusammensetzungen, die Polyurethanschäume selbst sowie deren Verwendungen zur Herstellung von Laminaten werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben, um Angaben in Massen-%.

Die erfindungsgemäßen Zusammensetzungen, die zur Herstellung von zur Heißverklebung geeigneten Polyurethanssystemen geeignet sind bzw. verwendet werden, zeichnen sich dadurch aus, dass sie von 0,1 bis 20 Massen-%, vorzugsweise 1 bis 10 Massen-%, bevorzugt 2,5 bis 8,5 und besonders bevorzugt 4,5 bis 5,5 Massen-% (bezogen auf die Gesamtzusammensetzung) eines Additivgemisches aufweisen, welches zumindest eine phosphororganische Verbindung (I), ausgewählt aus den Verbindungen der Formeln (Ia) bis (Ic) 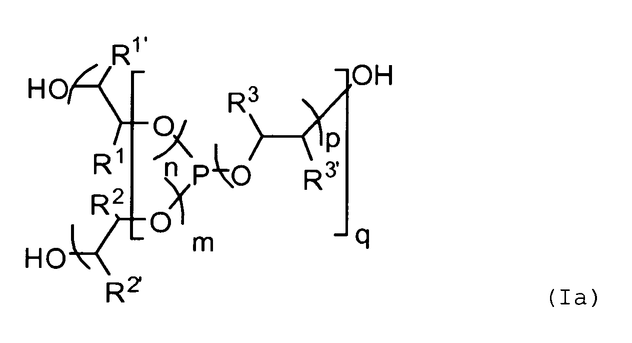 mit m, n und p = gleich oder verschieden, größer-gleich 1, vorzugsweise gleich 2 bis 30, vorzugsweise 2,5 bis 10, bevorzugt 2,5 bis 4,
q = größer-gleich 1, vorzugsweise 1 bis 5, bevorzugt 1 bis 3, insbesondere 1, und
R¹, R^{1'}, R², R^{2'}, R³ und R^{3'} gleich oder verschieden -H, - Alkyl, insbesondere CH₃ oder -Phenyl, vorzugsweise -H oder -CH₃, besonders bevorzugt -H, wobei es vorteilhaft sein kann, wenn die Reste R¹, R² und R³ Wasserstoffreste und die Reste R^{1'}, R^{2'} und R^{3'} Methyl-Reste oder ebenfalls Wasserstoffreste sind, 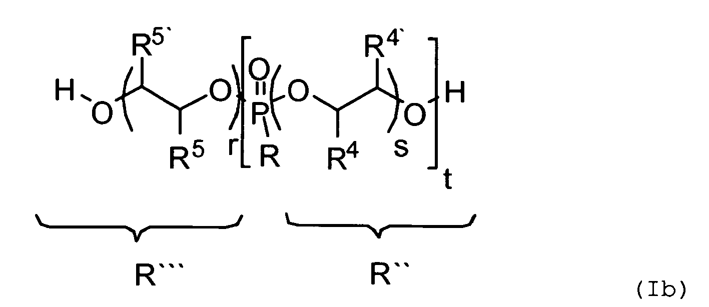 mit r = gleich oder verschieden, vorzugsweise gleich, größer-gleich 1, vorzugsweise 2 bis 30, bevorzugt 2,5 bis 10 und besonders bevorzugt 2,5 bis 4,
s = gleich oder verschieden, vorzugsweise gleich, 0 oder größer-gleich 1, vorzugsweise 2 bis 30, bevorzugt 2,5 bis 10 und besonders bevorzugt 2,5 bis 4,
t = größer-gleich 1, vorzugsweise 1 bis 5, bevorzugt 1 bis 3, insbesondere 1,
R⁴, R^{4'}, R⁵ und R^{5'} = gleich oder verschieden -H, -Alkyl, insbesondere CH₃ oder -Phenyl, vorzugsweise -H oder -CH₃, besonders bevorzugt -H, wobei es vorteilhaft sein kann, wenn die Reste R⁴ und R⁵ Wasserstoffreste und die Reste R^{4'} und R^{5'} Methyl-Reste oder ebenfalls Wasserstoffreste sind,
R = Wasserstoffrest, Alkylrest, vorzugsweise mit 1 bis 5, bevorzugt mit 1 oder 2 Kohlenstoffatomen, insbesondere Methylrest, Phenylrest, R" oder R"', bevorzugt Methylrest, und
r + s = 4 bis 60, vorzugsweise 5 bis 20 vorzugsweise 5 bis 8, und 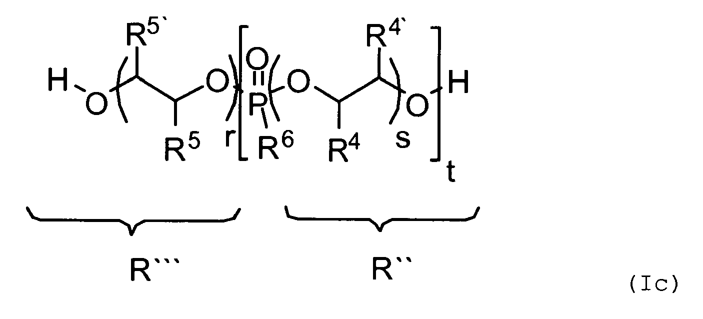 mit r, s, t, R⁴, R⁵, R^{4'}, R^{5'}, R" und R"' wie für Formel (Ib) definiert und R⁶ = -(CH₂)ₒ-OH, mit o = 1 bis 5, vorzugsweise 1 bis 2 und besonders bevorzugt 1, wobei r + s vorzugsweise 4 bis 60, bevorzugt 5 bis 20 und besonders bevorzugt 5 bis 8 beträgt, und zumindest eine Verbindung (X), die mindestens zwei funktionelle Gruppen aufweist, die mit Isocyanat-Gruppen reagieren können, und eine Äquivalenzmasse von kleiner 400 g/mol aufweist, oder aus einer oder mehreren Verbindungen der Formel (Ic) besteht. So enthält die erfindungsgemäße Zusammensetzung ein Additivgemisch, das ein Gemisch einer oder mehrerer Verbindungen (X) mit einer oder mehreren phosphororganischen Verbindungen (I) ist.

Die in den Verbindungen der Formeln (Ia) bis (Ic) enthaltenen mit den Indizes m, n, p, q, r, s und t gekennzeichneten Bausteine können in einem Molekül gleich (Homopolyether) oder verschieden sein. Es kann vorteilhaft sein, wenn die Bausteine in einer Verbindung oder auch im Zahlenmittel gemittelt über alle Verbindungen der jeweiligen Formel gleich sind und vorzugsweise entweder alle Ethylenoxid- oder alle Propylenoxid-Einheiten darstellen.

Bevorzugte phosphororganische Verbindungen vom Typ (Ia) sind solche der Formel (Ia1)

P(-(OCR⁷H-CHR^{7'})ᵤ-OH)₃ (Ia1)

mit u = gleich oder verschieden, vorzugsweise gleich, 2 bis 30, vorzugsweise 2,5 bis 10 bevorzugt 2,5 bis 4, und R⁷ und R^{7'} = gleich oder verschieden -H, -CH₃, -Phenyl, vorzugsweise -H oder -CH₃, besonders bevorzugt -H, wobei insbesondere R⁷ bevorzugt -H und R^{7'} -H oder CH₃ ist.

Bevorzugte phosphororganische Verbindungen vom Typ (Ib) sind solche, bei denen t = 1 und/oder R = Methyl ist. Bevorzugte phosphororganische Verbindungen vom Typ (Ic) sind solche, bei denen t = 1 und/oder R⁶ = -(CH₂)ₒ-OH, mit o = 1 ist.

Die Angaben für die Indizes m, n, o, p und q sind, wenn es sich um Gemische der jeweiligen Verbindungen handelt, als Mittelwerte (Zahlenmittel) zu verstehen.

Die phosphororganischen Verbindungen der Formel (I) können z. B. wie in Houben-Weyl "Methoden der organischen Chemie" Band XII/2, 4. Auflage, S. 21, 69, 143 ff., 336 beschrieben, hergestellt werden. Weitere geeignete Synthesemethoden sind z. B. zu finden in J.P.H. Verheyden, J.G. Moffatt; J. Org. Chem. 35, 1970, p. 2319. Der Anteil an phosphororganischen Verbindungen im Additiv Gemisch kann für die Verbindungen der Formel (Ic) vorzugsweise von 1 bis 100 Massen-%, bevorzugt von 5 bis 50 Massen-%, besonders bevorzugt von 10 bis 30 und besonders bevorzugt von 15 bis 25 Massen-% betragen.

Der Anteil an phosphororganischen Verbindungen im Additivgemisch kann für die Verbindungen der Formel (Ia) und (Ib) vorzugsweise von 1 bis 99 Massen-%, bevorzugt von 5 bis 50 Massen-%, besonders bevorzugt von 10 bis 30 Massen-% und besonders bevorzugt von 15 bis 25 Massen-% betragen.

Die phosphororganische Komponente kann ein hydroxylgruppenhaltiges Organophosphit, Organophosphonat oder Organophosphat sein, während es sich bei den Verbindungen (X) (Vernetzer bzw. Streckmittel) um polyfunktionelle Isocyanat-reaktive Verbindungen handelt.

Insbesondere durch die bevorzugte Kombination aus phosphororganischer Verbindung (I) und Verbindungen (X) wird überraschenderweise ein synergistischer Effekt erzielt. Weder durch Einsatz der Verbindungen (X) allein noch der Phosphorverbindungen (I) allein (mit Ausnahme der Verbindungen der Formel (Ic)) können bei gleicher Einsatzmenge Schäume mit vergleichbar starker oder stärkerer Anfangshaftung und entsprechender Hydrolysestabilität erhalten werden. Dieser synergistische Effekt wird besonders deutlich wenn in der Mischung Verbindungen der Formel (Ic) enthalten sind. Durch den Ersatz eines Teils der Verbindungen der Formel (I) durch eine Verbindung(X) kann bei gleicher oder sogar besserer Performance die Hydrolysestabilität erhöht werden.

Die erfindungsgemäße Zusammensetzung kann als Heißklebeadditiv ausschließlich Verbindungen der Formel (Ic) aufweisen oder aber bevorzugt ebenfalls Mischungen von Verbindungen der Formel (Ic) mit einer oder mehreren Verbindungen (X).

Als Verbindungen (X) können in der erfindungsgemäßen Zusammensetzung alle Verbindungen eingesetzt werden, die mindestens zwei, vorzugsweise zwei oder drei Isocyanat-reaktive Gruppen beinhalten. Die reaktiven Gruppen können dabei vorzugsweise Hydroxy- und/oder Aminogruppen, bevorzugt entsprechende primäre oder sekundäre Gruppen sein. Das Äquivalenzgewicht (= zahlengemitteltes Molekulargewicht / Funktionalität) sollte dabei 400 g/mol, bevorzugt 200 g/mol, besonders bevorzugt 150 g/mol nicht überschreiten. Solche Verbindungen können z.B. difunktionell sein, wie Bisphenol A oder darauf basierende Ethylenoxid- oder Propylenoxidpolyetherpolyole. Des Weiteren können auch höher funktionelle Vernetzer, wie z. B. trifunktionelle wie beispielsweise Glycerin oder auf Glycerin basierende Ethylenoxid- oder Propylenoxidpolyetherpolyole oder aber (Di)Pentaerithritol und darauf basierende Ethylenoxid- oder Propylenoxidpolyetherpolyole eingesetzt werden. Allgemein werden Vernetzungs- bzw. Streckmittel gewählt aus der Diethanolamin, Triethanolamin, Diisopropylamin, Ethylenglycol, Glycerin, Trimethylolpropan, Sorbitol, Erythritol, Saccharose, Butandiol, die Isomeren von Phenylendiamin, Pentaerythritol, 2,4,6-Triaminotoluol, Isophorondiamin, Diethyltolylendiamin, Ethanolamin, Hydrazin, Bisphenol-A, niedermolekulargewichtigen Oxalkylenaddukten, insbesondere Ethylenoxidaddukten von polyfunktionellen Aminen, polyfunktionellen Alkoholen, Aminoalkoholen und Alkoholaminen und Mischungen davon umfassenden Gruppe als Verbindungen (X) eingesetzt. Bevorzugte Additivgemische weisen zumindest eine Verbindung (X) auf, die Ethylenoxideinheiten enthält.

Als Verbindungen (X) weist das Additivgemisch Glycerinpolyether, die im Mittel (zahlenmäßiges) vorzugsweise von 8 bis 15, bevorzugt 9 bis 12, Alkylenoxid-Einheiten, insbesondere Ethylenoxid-Einheiten aufweisen und/oder ethoxyliertes Bisphenol A, welches vorzugsweise im Mittel (zahlenmäßiges) von 5 bis 7, bevorzugt im Mittel 6 Ethylenoxid-Einheiten aufweist. Geeignete Glycerinpolyether sind z. B. unter den Handelsnamen VORALUX^{®} HF-501 (Dow Chemical), ARCOL^{®} LG-168 (Bayer) oder VORANOL^{®} CP 4702 (Dow Chemical) erhältlich. Ethoxyliertes Bisphenol A kann z. B. über Sigma-Aldrich bezogen werden.

Das in der erfindungsgemäßen Zusammensetzung enthaltene Additivgemisch weist vorzugsweise von 1 bis 51 Massen-Teile an Verbindungen der Formel (I), insbesondere (Ia), (Ib) und /oder bis (Ic) oder Mischungen daraus und von 49 bis 99 Massen-Teile an Verbindungen (X), vorzugsweise von 10 bis 25 Massen-Teile an Verbindungen der Formel (Ia) bis (Ic) oder Mischungen daraus und 75 bis 90 Massen-Teile an Verbindungen (X) und bevorzugt von 15 bis 25 Massen-Teile an Verbindungen der Formel (Ib) bis (Ic) oder Mischungen daraus und 75 bis 85 Massen-Teile an Verbindungen (X), auf.

Die erfindungsgemäße Zusammensetzung kann alle weiteren, zur Herstellung von Polyurethansystemen, insbesondere Polyurethanschäumen geeigneten Komponenten enthalten. Insbesondere enthalten die erfindungsgemäßen Zusammensetzungen neben dem Additivgemisch vorzugsweise zumindest eine Isocyanatkomponente und zumindest eine Polyolkomponente sowie gegebenenfalls ein oder mehrere Treibmittel und gegebenenfalls ein oder mehrere Urethan- und/oder Isocyanurat-Katalysatoren.

Übliche Formulierungen zur Herstellung von PolyurethanSystemen, insbesondere -Schäumen, enthalten als Isocyanatkomponente ein oder mehrere organische Isocyanate mit zwei oder mehr Isocyanat-Funktionen, als Polyolkomponente ein oder mehrere Polyole mit zwei oder mehr gegenüber Isocyanat reaktiven Gruppen, optional Katalysatoren für die Reaktionen Isocyanat-Polyol und/oder Isocyanat-Wasser und/oder die IsocyanatTrimerisierung, Wasser, optional physikalische Treibmittel, optional Flammschutzmittel und ggf. weitere Additive.

Geeignete Isocyanate im Sinne dieser Erfindung sind vorzugsweise alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch.

Als Polyolkomponenten werden vorzugsweise solche Polyole eingesetzt, die Äquivalenzgewicht (= zahlengemitteltes Molekulargewicht / Funktionalität) von größer 400 g/mol, bevorzugt größer 500 g/mol und besonders bevorzugt größer 750 g/mol aufweisen. Bevorzugt eingesetzte Polyolkomponenten sind Verbindungen die ein zahlengemitteltes Molekulargewicht von 1000 bis 8000, bevorzugt 1500 bis 6000 aufweisen.

Als Polyole eignen sich insbesondere solche mit mindestens zwei, vorzugsweise 2 bis 8, bevorzugt 3 bis 5, gegenüber Isocyanatgruppen reaktiven H-Atomen. Vorzugsweise werden Polyetherpolyole eingesetzt. Solche Polyole können nach bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation von Alkylenoxiden in Gegenwart von LewisSäuren, wie beispielsweise Antimonpentachlorid oder Borfluorid-Etherat, oder durch Doppelmetallcyanidkatalyse. Geeignete Alkylenoxide enthalten vorzugsweise 2 bis 4 Kohlenstoffatome im Alkylenrest. Beispiele sind Ethylenoxid, 1,2-Propylenoxid, Tetrahydrofuran, 1,3- Propylenoxid, 1,2- bzw. 2,3- Butylenoxid. Vorzugsweise werden Ethylenoxid und/oder 1,2-Propylenoxid eingesetzt. Die Alkylenoxide können einzeln, alternierend nacheinander oder als Mischungen verwendet werden. Als Startermoleküle können z. B. Wasser oder 2- und 3-wertige Alkohole, wie Ethylenglykol, Propandiol-1,2 und -1,3, Diethylenglykol, Dipropylenglykol, Glycerin, Trimethylolpropan usw. eingesetzt werden. Auch polyfunktionelle Polyole wie z.B. Zucker können als Starter eingesetzt werden. Die bevorzugt eingesetzten Polyetherpolyole sind Polyoxypropylenpolyoxyethylen-polyole, die vorzugsweise eine Funktionalität von 2 bis 8 und/oder, vorzugsweise und, ein zahlengemitteltes Molekulargewicht von 1000 bis 8000, bevorzugt 1200 bis 3500 aufweisen. Weitere Polyole sind dem Fachmann bekannt und können zum Beispiel der EP-A-0 380 993 oder US-A-3 346557 entnommen werden, auf die in vollem Umfang Bezug genommen wird.

Bevorzugt werden zur Herstellung von Form- und hochelastischen Weichschaumstoffen zwei- und/oder dreifunktionelle Polyetheralkohole eingesetzt, die primäre Hydroxylgruppen, aufweisen, insbesondere solche mit einem Ethylenoxidblock am Kettenende oder solche, die nur auf Ethylenoxid basieren.

Vorzugsweise werden zur Herstellung von Blockweichschaumstoffen zwei- und/oder dreifunktionelle Polyetheralkohole eingesetzt, die sekundäre Hydroxylgruppen aufweisen, insbesondere solche mit einem Propylenoxidblock oder statistischem Propylen- und Ethylenoxidblock am Kettenende oder solche, die nur auf Propylenoxidblöcken basieren.

Geeignete Polyesterpolyole basieren auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen).

Ein geeignetes Verhältnis von Isocyanat und Polyol, ausgedrückt als Index der Zusammensetzung, liegt im Bereich von 10 bis 1000, bevorzugt 80 bis 350, wobei 100 ein molares Verhältnis der reaktiven Isocyanatgruppen zu reaktiven OH-Gruppen von 1 zu 1 angibt.

Geeignete Katalysatoren im Sinne dieser Erfindung sind Substanzen, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat oder Zinnoctoat und Kaliumsalze wie Kaliumacetat.

Geeignete Einsatzmengen richten sich nach dem Typ des Katalysators und liegen üblicherweise im Bereich von 0,05 bis 5 pphp (= Gewichtsteile bezogen auf 100 Gewichtsteile Polyol) bzw. 0,1 bis 10 pphp für Kaliumsalze.

Geeignete Wasser-Gehalte im Sinne dieser Erfindung hängen davon ab, ob zusätzlich zum Wasser noch physikalische Treibmittel eingesetzt werden oder nicht. Bei rein Wasser-getriebenen Schäumen liegen die Werte typischerweise bei 1 bis 20 pphp, werden zusätzlich andere Treibmittel eingesetzt, verringert sich die Einsatzmenge auf üblicherweise 0,1 bis 5 pphp. Zur Erlangung hoher Schaumraumgewichte werden vorzugsweise weder Wasser noch andere Treibmittel eingesetzt.

Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Neben Wasser und ggf. physikalischen Treibmitteln, können auch andere chemische Treibmittel eingesetzt werden, die mit Isocyanaten unter Gasentwicklung reagieren, wie beispielsweise Ameisensäure oder Carbonate.

Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Das erfindungsgemäße Polyurethansystem bzw. der erfindungsgemäße Polyurethanschaum ist durch Verarbeitung bzw. Verschäumen einer erfindungsgemäßen Zusammensetzung erhältlich. Bevorzugte erfindungsgemäße Polyurethansysteme oder -schäume weisen von 0,05 bis 10 Massen-%, vorzugsweise von 0,1 bis 5 Massen-% und besonders bevorzugt von 0,5 bis 2 Massen-% an phosphororganischen Verbindungen (I) bzw. einreagierten phosphororganischen Verbindungen (I) bezogen auf das System bzw. den Schaum auf. Der Gehalt lässt sich auf einfache Weise durch Ermittlung der Phosphorgehalts aus dem Molekulargewicht der eingesetzten Phosphorverbindungen bestimmten. Polyurethansysteme bzw. Polyurethanschäume mit bevorzugten Phosphorgehalten, die aus den oben genannten Einsatzmengen berechnet werden können, sind deshalb ebenfalls Gegenstand der Erfindung.

Die Verarbeitung der Zusammensetzung zu Polyurethansystemen, insbesondere Polyurethanschäumen kann nach allen dem Fachmann geläufigen Verfahren erfolgen, beispielsweise im Handmischverfahren oder bevorzugt mit Hilfe von Hochdruck-Verschäumungsmaschinen. Dabei können diskontinuierliche Verfahren, beispielsweise zur Produktion von Formschäumen, Kühlschränken und Paneelen, oder kontinuierliche Verfahren, beispielsweise bei Dämmplatten, Metallverbundelementen, Blöcken oder bei Sprühverfahren zum Einsatz kommen.

Die erfindungsgemäße laminierte Struktur enthält oder besteht aus einem Polyurethansystem, insbesondere Polyurethanschaum, der mit einem Substrat heißverklebt ist. Als Substrate kann die Struktur z. B. ein Gewebe, ein Vlies oder ein Filz, einer natürlichen oder synthetischen Faser, wie z. B. Baumwolle, Wolle, Seide, Leinen, Jute, Sisal, Nylon, Polyester, Polyacrylnitril, Rayon, Polyurethan-Spandex, ein Kunststofffilm, z. B. hergestellt unter Verwendung von Polyvinylchlorid, Polyethylen, Polypropylen, Polystyrol, ein Metall, ein Holz oder ein Verbundwerkstoff sein.

Die erfindungsgemäße laminierte Struktur ist durch das erfindungsgemäße Verfahren zur Herstellung einer laminierten Struktur erhältlich, welches sich dadurch auszeichnet, dass ein erfindungsgemäßes Polyurethansystem, insbesondere ein erfindungsgemäßer Polyurethanschaum mit einem Substrat heißverklebt wird.

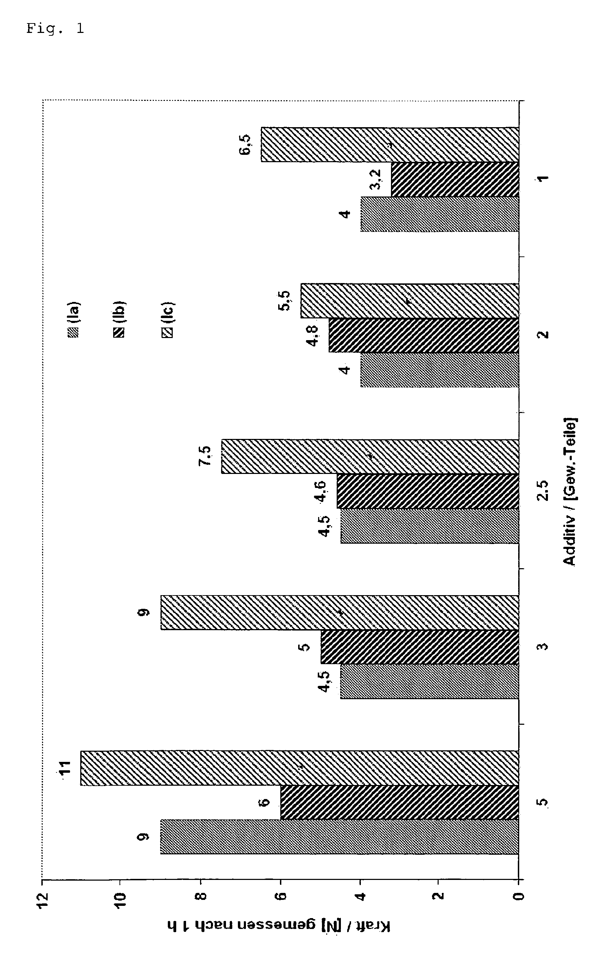

Die vorliegende Erfindung wird durch die Figuren näher erläutert, ohne darauf beschränkt zu sein. In den Figuren Fig. 1 bis 3 sind die Ergebnisse zu den unten angeführten Beispielen dargestellt.

In Figur 1 ist die zum Lösen des Substrats vom Polyurethanschaum benötigte Kraft bei Einsatz unterschiedlicher Konzentrationen der verschiedenen reinen Phosphorverbindungen der Formeln (Ia) bis (Ic) gemäß den Beispielen 1 bis 15 nach einer Stunde Laminierzeit aufgetragen. Es ist leicht zu erkennen, dass die zum Lösen der Heißklebestelle benötigte Kraft bei Verwendung des erfindungsgemäßen Additivs (Ic) am größten ist wenn fünf Teile eingesetzt werden. Verglichen mit den Verbindungen vom Typ (Ia) und (Ib) resultiert bei der Verwendung von Verbindungen der Formel (Ic) auch bei signifikant niedrigeren Einsatzmengen eine wesentlich höhere Haftung. Nach einer Laminierzeit von 60 Minuten werden auch bei Einsatz von lediglich 3 Teilen der Verbindung des Typs (Ic) Laminate mit sehr hoher Haftung erhalten. Dabei sind Kräfte von ca. 9 N notwendig, um den Schaum vom Substrat zu lösen.

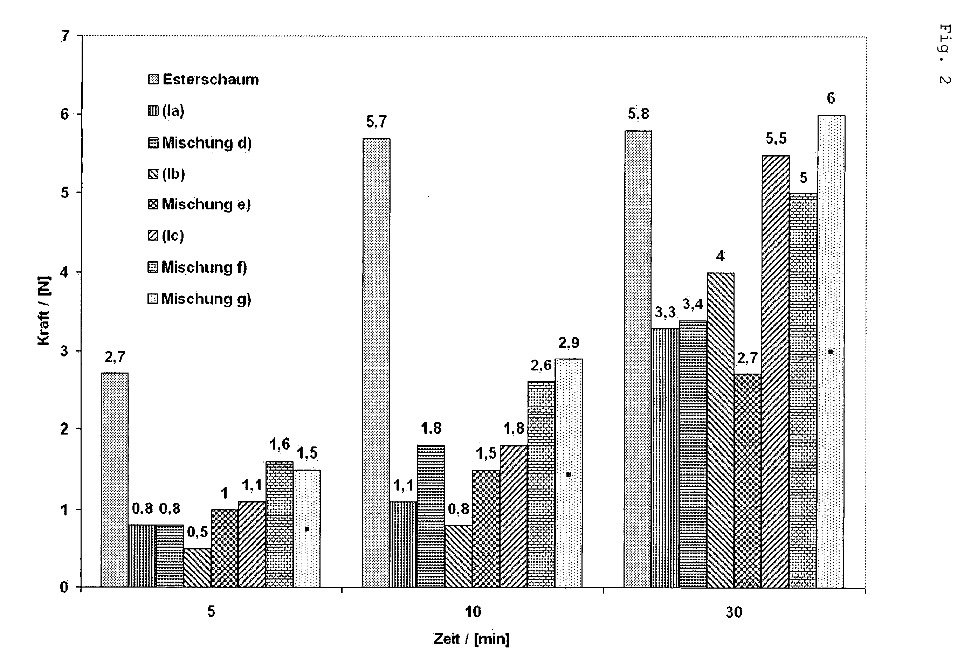

Fig. 2 vergleicht die Anfangshaftung der unterschiedlichen Verbindungen der Formeln (Ia) bis (Ic) bei gleichen Einsatzmengen von 5 Teilen, bzw. unter Einsatz von Vernetzer und Reduzierung der phosphororganischen Verbindung.

Es ist insbesondere bei Verbindungen der Formeln (Ib) und (Ic) zu erkennen, dass die Anfangshaftung insbesondere nach 5 und 10 min. durch den Zusatz von Vernetzer (X) stark erhöht wird, obwohl die Einsatzmenge der phosphororganischen Verbindung um 80 Massen-% geringer ist. Nach 30 min Laminierzeit ist bei Verwendung der synergistischen Mischung von (Ic) mit beispielsweise ethoxyliertem Bisphenol-A (Mischung g)) bereits eine bessere Haftung als bei einem Esterschaum zu beobachten.

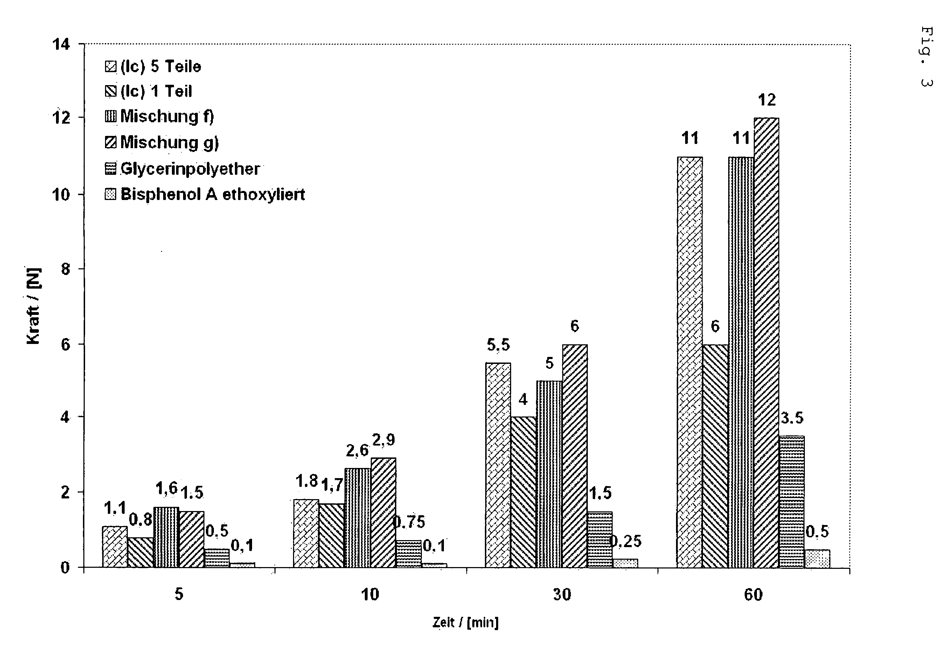

In Fig. 3 ist wiederum die zum Lösen des Substrats vom Polyurethanschaum benötigte Kraft für verschiedene Zusammensetzungen, die eine Verbindung gemäß Formel (Ic) aufweisen, aufgetragen gegen die Laminierzeit. Es ist leicht zu erkennen, dass bei einem Einsatz der Verbindung der Formel (Ic) von nur einem Teil die Endfestigkeit wesentlich geringer ist als bei einem Einsatz von fünf Teilen der Verbindung (Ic) oder bei Zusatz von fünf Teilen der synergistischen Mischung (f) oder (g), die nur einen geringfügigen Anteil der Verbindung (Ic) beinhaltet. Gleichzeitig ergibt sich eine sehr ähnliche Haftung bei Einsatz von fünf Teilen der Verbindung (Ic) verglichen mit der Haftung bei Zusatz von fünf Teilen der Mischung. Nach ca. 60 min Laminierzeit kommt es in den Beispielen 11 und 37 zum Riss des Schaums, in Beispiel 41 zu einer sehr hohen Schälkraft von 12 N aufgrund der sehr guten Haftung des Schaums auf dem Textil.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele

### Herstellung von Polyurethanschäumen

Zur Herstellung der Polyurethanschäume wurde folgende Rezeptur verwendet: 100 Gew.-Teile eines Ethylenoxid-Einheiten (EO) und Propylenoxid-Einheiten (PO) aufweisenden Polyetherol (Hydroxylzahl = 47 mg KOH/g, 11 bis 12 Gew-% EO bezogen auf die Summe aus EO und PO), 3 Gew.-Teile Wasser, 0,8 Gew.-Teil TEGOSTAB® B 8228 (Marke der Th. Goldschmidt AG) (Silikonstabilisator), 0,15 Gew.-Teile eines tertiären Amins (TEGOAMIN® B-75, ein Produkt der Evonik Goldschmidt GmbH), variable Gew.-Teile Toluoldiisocyanat T 80 (Index 105), sowie eine variable Menge an KOSMOS® 29 (Evonik Goldschmidt GmbH) (Zinnoctoat) und eine variable Menge des entsprechenden Flammlaminieradditivs.

Bei der Verschäumung wurden 200 g Polyol eingesetzt, die anderen Formulierungsbestandteile wurden entsprechend umgerechnet. In Tabelle 1 sind die variablen Bestandteile der Rezepturen der Beispielschäume 1 bis 43 zusammengefasst.

Zur Verschäumung wurden Polyol, Wasser, Amin, Zinnkatalysator, Flammlaminieradditiv und Silikonstabilisator unter Rühren gut vermischt. Nach Zugabe des Isocyanats wurde mit einem Rührer 7 Sek. bei 3000 U / min gerührt. Das erhaltene Gemisch wurde in einen mit Papier ausgekleideten Holzkasten (Grundfläche 17 cm x 17 cm) gegossen. Es entstand ein Schaumstoff, der nach einem Tag Lagerung in 4,3 cm (Breite) x 14 cm (Länge) x 1 cm (Höhe) große Scheiben geschnitten wurde.

**Tabelle 1: Variablen Bestandteile der Rezepturen der Beispielschäume 1 bis 43.**

| Beispiel Nr. | Erfindungsgemäß | Additiv^{[1]} | Additiv [Gew.-Teile] | Laminierzeit [min] |
|---|---|---|---|---|
| 1 | Nein | a) | 5 | 60 |
| 2 | Nein | a) | 3 | 60 |
| 3 | Nein | a) | 2,5 | 60 |
| 4 | Nein | a) | 2 | 60 |
| 5 | Nein | a) | 1 | 60 |
| 6 | Nein | b) | 5 | 60 |
| 7 | Nein | b) | 3 | 60 |
| 8 | Nein | b) | 2,5 | 60 |
| 9 | Nein | b) | 2 | 60 |
| 10 | Nein | b) | 1 | 60 |
| 11 | Ja | c) | 5 | 60 |
| 12 | Ja | c) | 3 | 60 |
| 13 | Ja | c) | 2,5 | 60 |
| 14 | Ja | c) | 2 | 60 |
| 15 | Ja | c) | 1 | 60 |
| 16 | Nein | a) | 5 | 5 |
| 17 | Nein | a) | 5 | 10 |
| 18 | Nein | a) | 5 | 30 |
| 19 | Ja | d) | 5 | 5 |
| 20 | Ja | d) | 5 | 10 |
| 21 | Ja | d) | 5 | 30 |
| 22 | Nein | b) | 5 | 5 |
| 23 | Nein | b) | 5 | 10 |
| 24 | Nein | b) | 5 | 30 |
| 25 | Ja | e) | 5 | 5 |
| 26 | Ja | e) | 5 | 10 |
| 27 | Ja | e) | 5 | 30 |
| 28 | Ja | c) | 5 | 5 |
| 29 | Ja | c) | 5 | 10 |
| 30 | Ja | c) | 5 | 30 |
| 31 | Ja | f) | 5 | 5 |
| 32 | Ja | f) | 5 | 10 |
| 33 | Ja | f) | 5 | 30 |
| 34 | Ja | c) | 1 | 5 |
| 35 | Ja | c) | 1 | 10 |
| 36 | Ja | c) | 1 | 30 |
| 37 | Ja | f) | 5 | 60 |
| 38 | Ja | g) | 5 | 5 |
| 39 | Ja | g) | 5 | 10 |
| 40 | Ja | g) | 5 | 30 |
| 41 | Ja | g) | 5 | 60 |
| 42 | Nein | h) | 5 | 60 |
| 43 | Nein | i) | 5 | 60 |

| | | | | |
|---|---|---|---|---|
| ^{[1]} a) = Tris(dipropylenglycol)phosphit b) = Di(polyoxyethylen)methylphosphonat c) = Di(polyoxyethylen)hydroxymethylphosphonat d) = 1 Massen-Teil Tris(dipropylenglycol)phosphit + 4 Massen-Teile Glycerinpolyether e) = 1 Massen-Teil Di(polyoxyethylen)methylphosphonat + 4 Massen-Teile Glycerinpolyether f) = 1 Massen-Teil Di(polyoxyethylen)hydroxymethylphosphonat + 4 Massen-Teile Glycerinpolyether g) = 1 Massen-Teil Di(polyoxyethylen)hydroxymethylphosphonat + 4 Massen-Teile Bisphenol-A ethoxyliert h) = Glycerinpolyether i) = Bisphenol-A (ethoxyliert) von Sigma-Aldrich | | | | |

Die Synthesemethode der eingesetzten phosphororganischen Verbindungen ist ausführlich in Houben-Weyl "Methoden der organischen Chemie" Band XII/2, 4. Auflage, S. 21, 69, 143 ff., 336 beschrieben. Weitere Syntheseschritte sind zu finden in J.P.H. Verheyden, J.G. Moffatt; J. Org. Chem. 35, 1970, p. 2319.

Die Flammkaschierung wurde im Labor manuell wie folgt durchgeführt:
Die Schaumprobe wurde auf einen feuerfesten Schlitten gelegt, der durch Druckluft bei Knopfdruck mit einer Geschwindigkeit von 7 cm/s die Brennerflamme passiert.
Bei dem Brenner handelte es sich um einen handelsüblichen Campinggasbrenner, der mit Butangaskartuschen betrieben wurde. Die Düse des Brenners ist nach unten geneigt und hat einen Abstand vom Schaum von 6 cm. Die Stärke der Gaszufuhr wurde so eingestellt, dass man eine blaue Flamme erhielt. Nach dem Passieren des Schaums wurde ein zurechtgeschnittenes Stück Textil auf den Schaum gelegt.
Der kaschierte Schaum wurde nun zwischen zwei Fliesen gelegt und mit Hilfe eines Stativs für eine variable Zeit x (Laminierzeit 5 min bis 24 h) unter konstanten leichten Druck gesetzt.

Die Haftfestigkeit (Schälversuche) wurde gemäß DIN EN ISO 8067, 07/1995 gemessen, wobei eine Schälgeschwindigkeit von 100 mm/min gewählt wurde.

Jeder Schaum wurde viermal laminiert und die Haftfestigkeit wurde jeweils bestimmt. Bei den in Tabelle 2 angegebenen Werten handelt es sich daher um Mittelwerte aus vier Messungen.

Die Ergebnisse sind in Tabelle 2 zusammengefasst.

**Tabelle 2: Ergebnisse der Bestimmung der Haftfestigkeit der Schäume**

| Beispiel Nr. | Laminierzeit [min] | Abschälkraft [N] |
|---|---|---|
| 1 | 60 | 9,0 |
| 2 | 60 | 4,5 |
| 3 | 60 | 4,5 |
| 4 | 60 | 4,0 |
| 5 | 60 | 4,0 |
| 6 | 60 | 6,0 |
| 7 | 60 | 5,0 |
| 8 | 60 | 4,6 |
| 9 | 60 | 4,8 |
| 10 | 60 | 3,2 |
| 11 | 60 | Riss |
| 12 | 60 | 9,0 |
| 13 | 60 | 7,5 |
| 14 | 60 | 5,5 |
| 15 | 60 | 6,5 |
| 16 | 5 | 0,8 |
| 17 | 10 | 1,1 |
| 18 | 30 | 3,3 |
| 19 | 5 | 0,8 |
| 20 | 10 | 1,8 |
| 21 | 30 | 3,4 |
| 22 | 5 | 0,5 |
| 23 | 10 | 0,8 |
| 24 | 30 | 4,0 |
| 25 | 5 | 1,0 |
| 26 | 10 | 1,5 |
| 27 | 30 | 2,7 |
| 28 | 5 | 1,1 |
| 29 | 10 | 1,8 |
| 30 | 30 | 5,5 |
| 31 | 5 | 1,6 |
| 32 | 10 | 2,6 |
| 33 | 30 | 5,0 |
| 34 | 5 | 0,8 |
| 35 | 10 | 1,7 |
| 36 | 30 | 4,0 |
| 37 | 60 | Riss |
| 38 | 5 | 1,5 |
| 39 | 10 | 2,9 |
| 40 | 30 | 6,0 |
| 41 | 60 | 12,0 |
| 42 | 60 | 3,5 |
| 43 | 60 | 0,5 |

### Messung der Hydrolysestabilität

Die Hydrolysestabilität wurde in Anlehnung an die Prüfvorschrift ASTM D 1564-71 bestimmt. Dabei wurden die Bedingungen 5.1.2 herangezogen. Die Aufheiz- und Trocknungszyklen wurden für jeden Schaum insgesamt dreimal durchgeführt und der Verlust der Stauchhärte nach 3 Zyklen bestimmt.

Tabelle 3 fasst die Ergebnisse der Hydrolysestabilitätsmessungen zusammen.

**Tabelle 3: Ergebnisse der Stauchhärtemessungen (CLD = compression load deflection= Stauchhärte) zur Bestimmung der Hydrolysestabilität**

| Nr. | erfindungsgemäß | Phosphorgehalt im Additiv [%] | CLD 40% [kPa] vorher | CLD 40% [kPa] nachher | CLD loss [%] | CLD loss i.V. zu 45 [%] |
|---|---|---|---|---|---|---|
| 1 | nein | 7,3 | 2,9 | 1,4 | 52 | 5 |
| 6 | nein | 12 | 4,5 | 2,0 | 56 | 1 |
| 11 | ja | 7,75 | 4,4 | 2,1 | 52 | 5 |
| 19 | ja | 1,55 | 3,5 | 2,2 | 37 | 20 |
| 25 | ja | 1,55 | 3,6 | 2,1 | 42 | 15 |
| 31 | ja | 1,55 | 3,8 | 2,2 | 42 | 15 |
| 38 | ja | 1,55 | 4,0 | 2,5 | 38 | 19 |
| 44* | nein | - | 3,3 | 2,1 | 36 | 21 |
| 45** | nein | - | 4,4 | 1,9 | 57 | 0 |

| | | | | | | |
|---|---|---|---|---|---|---|
| * : Polyetherpolyol-Polyurethanschaum ohne Additiv ** : Polyesterpolyol-Polyurethanschaum ohne Additiv | | | | | | |

Aus den Ergebnissen geht deutlich hervor, dass die Hydrolysestabilität durch Einsatz des Additivgemisches eindeutig erhöht wird. Die Beispiele 19, 25, 31 und 38 zeigen, dass sie mit einer prozentualen Abnahme der Stauchhärte von 37 bis 42% im Bereich der Abnahme der Stauchhärte eines konventionellen Polyether-Polyurethanschaumes ohne Additivzusatz liegen (36%). Die Abnahme der Stauchhärte sowohl eines Esterschaums als auch der Schäume 1, 6 und 11 hingegen liegt in der Größenordnung von 55% und damit um ca. 20 % höher im Vergleich zu Schäumen mit optimiertem Additivgemisch.

## Patentansprüche

1. Zusammensetzung, die zur Herstellung von zur Heißverklebung geeigneten Polyurethanssystemen geeignet ist, **dadurch gekennzeichnet, dass** sie von 0,1 bis 20 Massen-% bezogen auf die Gesamtzusammensetzung eines Additivgemisches aufweist, welches zumindest eine phosphororganische Verbindung (I), ausgewählt aus den Verbindungen der Formeln (Ia) bis (Ic) 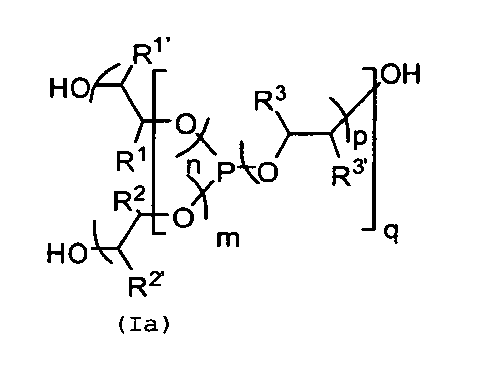 mit m, n und p = gleich oder verschieden, größer-gleich 1,
q = größer-gleich 1, und
R¹, R^{1'}, R², R^{2'}, R³ und R^{3'} gleich oder verschieden - H, -Alkyl, oder -Phenyl, 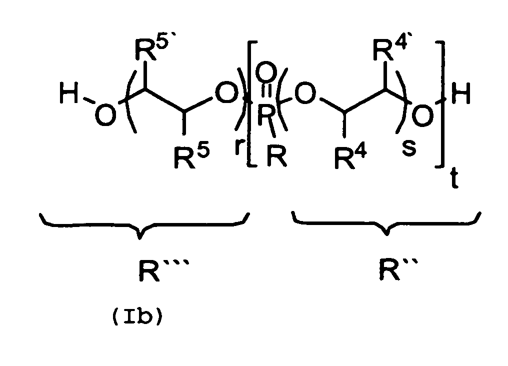 mit r = gleich oder verschieden, größer-gleich 1,
s = gleich oder verschieden 0 oder größer-gleich 1, t = größer-gleich 1,
R⁴, R^{4'}, R⁵ und R^{5'} = gleich oder verschieden -H, - Alkyl oder -Phenyl,
R = Wasserstoffrest, Alkylrest, Phenylrest, R" oder R"', und
r + s = 4 bis 60, und 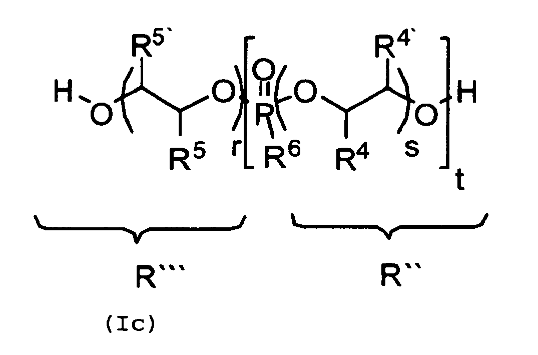 mit r, s, t, R⁴, R⁵, R^{4'}, R^{5'}, R'' und R''' wie für Formel (Ib) definiert und R⁶ = -(CH₂)ₒ-OH, mit o = 1 bis 5,
und mindestens eine Verbindung (X), die mindestens zwei funktionelle Gruppen aufweist, die mit Isocyanat-Gruppen reagieren können (Isocyanat-reaktive Gruppen), und eine Äquivalenzmasse von kleiner 400 g/mol aufweist, oder aus einer oder mehreren Verbindungen der Formel (Ic) besteht, wobei das Additivgemisch als Verbindung (X) einen Glycerinpolyether und/oder ein ethoxyliertes Bisphenol A aufweist.

2. Zusammensetzung nach Anspruch 1, **dadurch gekennzeichnet, dass** das Additivgemisch ein Gemisch einer oder mehrerer Verbindungen (X) mit einer oder mehreren phosphororganischen Verbindungen (I) ist.

3. Zusammensetzung nach Anspruch 1 oder 2, **dadurch gekennzeichnet, dass** das Additivgemisch zumindest Verbindung (X) aufweist, die Ethylenoxideinheiten enthält.

4. Zusammensetzung nach mindestens einem der Ansprüche 1 bis 3, **dadurch gekennzeichnet, dass** das Additivgemisch als Verbindung (X) einen Glycerinpolyether, der von 9 bis 12 Alkylenoxideinheiten aufweist, und/oder ein ethoxyliertes Bisphenol A, welches 5 bis 7 Ethylenoxydeinheiten aufweist, enthält.

5. Zusammensetzung nach mindestens einem der Ansprüche 1 bis 4, **dadurch gekennzeichnet, dass** das Additivgemisch von 1 bis 25 Massen-Teile an phosphororganischen Verbindungen (I) und von 75 bis 99 Massen-Teile an Verbindungen (X) aufweist.

6. Zusammensetzung nach mindestens einem der Ansprüche 1 bis 5, **dadurch gekennzeichnet, dass** sie neben dem Additivgemisch zumindest eine Isocyanatkomponente und zumindest eine Polyolkomponente sowie ggf. ein oder mehrere Treibmittel und/oder ein oder mehrere Urethan- und/oder Isocyanurat-Katalysator aufweist.

7. Verwendung einer Zusammensetzung gemäß einem der Ansprüche 1 bis 6, zur Herstellung von laminierten Strukturen.

8. Polyurethanssystem, erhältlich durch Verarbeitung einer Zusammensetzung gemäß einem der Ansprüche 1 bis 6.

9. Polyurethanschaum, erhältlich durch Verschäumen einer Zusammensetzung gemäß einem der Ansprüche 1 bis 6.

10. Laminierte Struktur, umfassend ein Polyurethansystem gemäß Anspruch 8 oder einen Polyurethanschaum gemäß Anspruch 9, heißverklebt mit einem Substrat.

11. Verfahren zur Herstellung einer laminierten Struktur gemäß Anspruch 10, **dadurch gekennzeichnet, dass** ein Polyurethansystem gemäß Anspruch 8 oder ein Polyurethanschaum gemäß Anspruch 9 mit einem Substrat heißverklebt wird.

## Claims

1. Composition which is suitable for producing polyurethane systems suitable for hot adhesive bonding, **characterized in that** it comprises from 0.1 to 20% by mass based on the total composition of an additive mixture comprising at least one organic phosphorus compound (I) selected from among the compounds of the formulae (Ia) to (Ic) 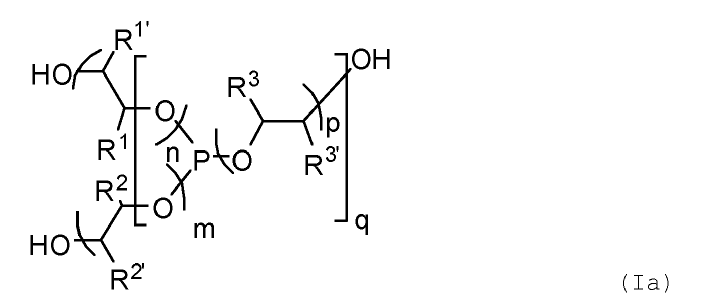 where m, n and p are identical or different and are each greater than or equal to 1,
q is greater than or equal to 1 and
R¹, R^{1'}, R², R^{2'}, R³ and R^{3'} are identical or different and are each -H, -alkyl or -phenyl, 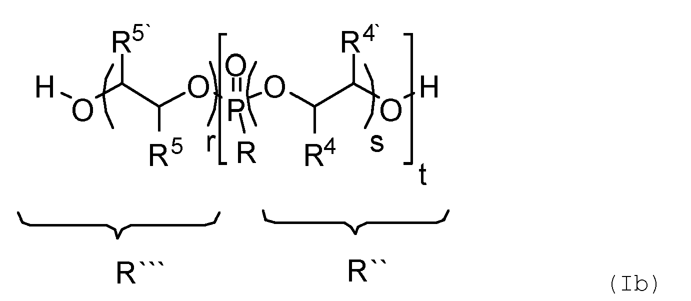 where the indices r are identical or different and are each greater than or equal to 1,
the indices s are identical or different and are each 0 or greater than or equal to 1,
t is greater than or equal to 1,
R⁴, R^{4'}, R⁵ and R^{5'} are identical or different and are each -H, -alkyl or -phenyl,
R is a hydrogen radical, alkyl radical, phenyl radical, R" or R"' and
r + s is from 4 to 60, and 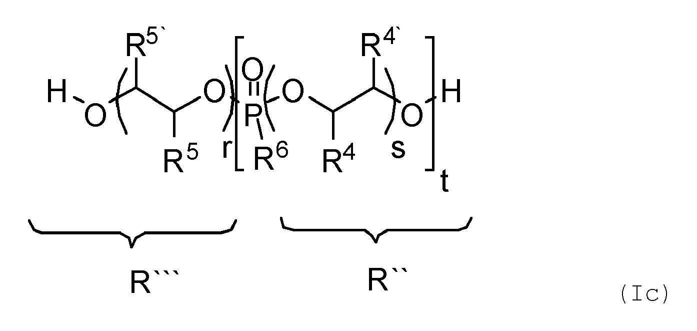 where r, s, t, R⁴, R⁵, R^{4'}, R^{5'}, R'' and R''' are as defined for formula (Ib) and R⁶ is - (CH₂)ₒ-OH, where o is from 1 to 5,
and at least one compound (X) which has at least two functional groups capable of reacting with isocyanate groups (isocyanate-reactive groups) and has an equivalent mass of less than 400 g/mol or one or more compounds of the formula (Ic), where the additive mixture comprises a glycerol polyether and/or an ethoxylated bisphenol A as compound (X).

2. Composition according to Claim 1, **characterized in that** the additive mixture is a mixture of one or more compounds (X) with one or more organic phosphorus compounds (I).

3. Composition according to Claim 1 or 2, **characterized in that** the additive mixture comprises at least compound (X) containing ethylene oxide units.

4. Composition according to at least one of Claims 1 to 3, **characterized in that** the additive mixture comprises a glycerol polyether having from 9 to 12 alkylene oxide units and/or an ethoxylated bisphenol A having from 5 to 7 ethylene oxide units as compound (X).

5. Composition according to at least one of Claims 1 to 4, **characterized in that** the additive mixture comprises from 1 to 25 parts by mass of organic phosphorus compounds (I) and from 75 to 99 parts by mass of compounds (X).

6. Composition according to at least one of Claims 1 to 5, **characterized in that** it comprises, in addition to the additive mixture, at least one isocyanate component and at least one polyol component and also, if appropriate, one or more blowing agents and/or one or more urethane and/or isocyanurate catalysts.

7. Use of a composition according to any of Claims 1 to 6 for producing laminated structures.

8. Polyurethane system which can be obtained by processing a composition according to any of Claims 1 to 6.

9. Polyurethane foam which can be obtained by foaming a composition according to any of Claims 1 to 6.

10. Laminated structure comprising a polyurethane system according to Claim 8 or a polyurethane foam according to Claim 9 hot adhesively bonded to a substrate.

11. Process for producing a laminated structure according to Claim 10, **characterized in that** a polyurethane system according to Claim 8 or a polyurethane foam according to Claim 9 is hot adhesively bonded to a substrate.

## Revendications

1. Composition qui est appropriée à la production de systèmes polyuréthane appropriés au collage à chaud, **caractérisée en ce qu'**elle comporte de 0,1 à 20 % en masse, par rapport à la composition totale, d'un mélange d'additifs qui comporte au moins un composé organophosphoré (I), choisi parmi les composés de formules (Ia) à (Ic) 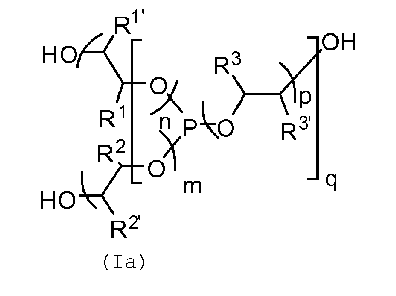 où m, n et p, identiques ou différents, sont supérieurs ou égaux à 1,
q est supérieur ou égal à 1, et
R¹, R^{1'}, R², R^{2'} et R^{3'}, identiques ou différents, représentent H, un groupe alkyle ou phényle, 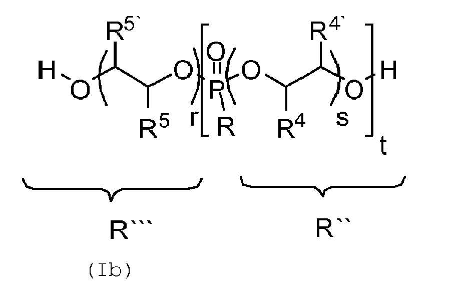 où r, le même ou différent est supérieur ou égal à 1, s, le même ou différent, est 0 ou supérieur ou égal à 1,
t est supérieur ou égal à 1,
R⁴, R^{4'}, R⁵ et R^{5'}, identiques ou différents, représentent H, un groupe alkyle ou phényle,
R représente un atome d'hydrogène, un radical alkyle, un radical phényle, R" ou R"', et
r + s = 4 à 60, et 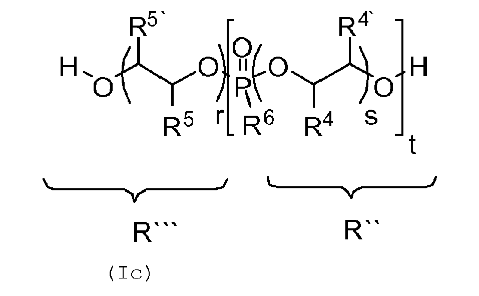 où r, s, t, R⁴, R⁵, R^{4'}, R^{5'}, R'' et R''' sont tels que définis pour la formule (Ib) et R⁶ = -(CH₂)ₒ-OH, où o = 1 à 5,
et au moins un composé (X) qui comporte au moins deux groupes fonctionnels qui peuvent réagir avec des groupes isocyanate (groupes réactifs avec des isocyanates), et présente une masse équivalente inférieure à 400 g/mole, ou consiste en un ou plusieurs composés de formule (Ic), le mélange d'additifs comportant en tant que composé (X) un polyéther de glycérol et/ou un bisphénol A éthoxylé.

2. Composition selon la revendication 1, **caractérisée en ce que** le mélange d'additifs est un mélange d'un ou plusieurs composés (X) avec un ou plusieurs composés organophosphorés (I).

3. Composition selon la revendication 1 ou 2, **caractérisée en ce que** le mélange d'additifs comprend au moins un composé (X) qui contient des motifs oxyde d'éthylène.

4. Composition selon au moins l'une des revendications 1 à 3, **caractérisée en ce que** le mélange d'additifs contient en tant que composé (X) un polyéther de glycérol qui comporte de 9 à 12 motifs oxyde d'alkylène, et/ou un bisphénol A éthoxylé qui comporte de 5 à 7 motifs oxyde d'éthylène.

5. Composition selon au moins l'une des revendications 1 à 4, **caractérisée en ce que** le mélange d'additifs comporte de 1 à 25 parties en masse de composés organophosphorés (I) et de 75 à 99 parties en masse de composés (X).

6. Composition selon au moins l'une des revendication 1 à 5, **caractérisée en ce qu'**en plus du mélange d'additifs elle comporte au moins un composant isocyanate et au moins un composant polyol ainsi qu'éventuellement un ou plusieurs agents d'expansion et/ou un ou plusieurs catalyseur(s) uréthanne et/ou isocyanurate.

7. Utilisation d'une composition selon l'une quelconque des revendications 1 à 6, pour la production de structures stratifiées.

8. Système polyuréthane, pouvant être obtenu par transformation d'une composition selon l'une quelconque des revendications 1 à 6.

9. Mousse de polyuréthane, pouvant être obtenue par moussage d'une composition selon l'une quelconque des revendications 1 à 6.

10. Structure stratifiée, comprenant un système polyuréthane selon la revendication 8 ou une mousse de polyuréthane selon la revendication 9, collés à chaud avec un support.

11. Procédé pour la production d'une structure stratifiée selon la revendication 10, **caractérisé en ce qu'**on colle à chaud avec un support un système polyuréthane selon la revendication 8 ou une mousse polyuréthane selon la revendication 9.
